# EUROPEAN PATENT APPLICATION

(11) **EP 3 081 796 A1**
(43) Date of publication of application: **19.10.2016**
(21) Application number: 16164137.8
(22) Date of filing: 06.04.2016
(51) Int. Cl.: F02K 1/60, F02K 1/72

(54) **TRANSLATING COWL THRUST REVERSER WITH PIVOTA BLOCKER DOORS**

(30) Priority: 16.04.2015 US 201514688779
(71) Applicant: Honeywell International Inc., Morris Plains, NJ 07950 (US)
(72) Inventor: SMITH, Danis Burton, Morris Plains, New Jersey 07950 (US); KNOWLES, Mark, Morris Plains, New Jersey 07950 (US); ROMANO, Robert, Morris Plains, New Jersey 07950 (US); ALSTAD, Shawn, Morris Plains, New Jersey 07950 (US); ROBINSON, David, Morris Plains, New Jersey 07950 (US); PICAZO, Israel, Morris Plains, New Jersey 07950 (US)
(74) Representative: Houghton, Mark Phillip

(57) **Abstract**

A thrust reverser system capable of providing high efficiency within a tightly constrained nacelle is provided. The thrust reverser system provides a displaceable internal door pivotally mounted within a transcowl. The displaceable internal door is rotatable about a pivot axis that is positioned aft of a front edge of the transcowl when the transcowl is in a deployed position.

## Description

### TECHNICAL FIELD

The present invention relates to a thrust reverser system for a turbofan engine, and more particularly to a thrust reverser system in which an internal door has a pivot axis aft of the reverse flow path of the turbofan engine.

### BACKGROUND

When jet-powered aircraft 1and, the wheel brakes and the imposed aerodynamic drag loads (e.g., flaps, spoilers, etc.) of the aircraft may not be sufficient to achieve the desired stopping distance. Thus, turbofan engines on most jet-powered aircraft include thrust reversers. Thrust reversers enhance the stopping power of the aircraft by redirecting the turbofan engine exhaust airflow in order to generate reverse thrust. When stowed, the thrust reverser typically forms a portion the engine nacelle and forward thrust nozzle. When deployed, the thrust reverser typically redirectsat least a portion of the airflow (from the fan and/or engine exhaust) forward and radially outward, to help decelerate the aircraft.

Various thrust reverser designs are commonly known, and the particular design utilized depends, at least in part, on the engine manufacturer, the engine configuration, and the propulsion technology being used. Thrust reverser designs used most prominently with turbofan jet engines fall into two general categories: (1) fan flow thrust reversers, and (2) mixed flow thrust reversers. Fan flow thrust reversers affect only the airflow discharged from the engine fan. Whereas, mixed flow thrust reversers affect both the fan airflow and the airflow discharged from the engine core (engine airflow).

Fan flow thrust reversers are typically used on relatively high-bypass ratio turbofan engines.Fan flow thrust reversers include so-called "Cascade-type" or "Translating Cowl-type"thrust reversers.Fan flow thrust reversers generally wrap circumferentially around the engine core aft of the engine fan and, when deployed, redirect fanairflow through a plurality of cascade vanes disposed within an aperture of a reverse flow path. Typically, fan flow thrust reverser designs include one or more translating sleeves or cowls ("transcowls") that, when deployed, open an aperture, expose cascade vanes, and create a reverse flow path. Fan flow reversers may also include so-called pivot doors or blocker doors which, when deployed, rotate to block the forward thrust flow path.

In contrast, mixed flow thrust reversers are typically used with relatively low-bypass ratio turbofan engines. Mixed flow thrust reversers include so-call "Target-type," "Bucket-type," and "Clamshell Door-type" thrust reversers. Mixed flow thrust reversers typically use two or morepivoting doors that rotate, simultaneously opening a reverse flow path through an aperture and blocking the forward thrust flow path. Mixed flow thrust reversers are necessarily located aft or downstream of the engine fan and core, and often form the aft part of the engine nacelle.

Each of the thrust reverser types in the above description has their merits and penalties. Fan flow thrust reversers are most suitable for use with relatively high-bypass ratio engines,because(i) adequate decelerating force can be achieved by redirecting only the fan flow, and (ii) the fan flow thrust reverser components are not exposed to the relatively high temperatures of the engine core exhaust.By comparison, mixed flow thrust reversers are most suitable for use with relatively low-bypass ratio engines, which typically require the redirection of both the fan airflow and the engine core airflow in order to achieve an adequate decelerating force. Consequently, the components of a mixed flow thrust reverser are exposed to higher temperatures than those of the fan flow thrust reverser, generally requiring the mixed flow thrust reverser components be designed from heavier and more expensive materials, which increases the cost and weight and often results in a lower level of efficiency than fan flow thrust reversers may achieve.

While the above described thrust reversers have satisfied most aircraft design demands until now, emerging aircraft designs are driving a demand for hybridized solutions.In particular, emerging aircraft designs that employ relatively low bypass ratio engines require thrust reversers with weight and performance characteristics that traditional mixed flow thrust reverser designs cannot meet. Hence, there is a need for a thrust reverser design compatible with the mixed flow operating environment, but providing efficiency and weight characteristics similar to fan flow thrust reversers.

### BRIEF SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

A thrust reverser system for a turbofan engine is provided. The thrust reverser comprises: a support structure configured to be mounted to the turbofan engine;a transcowl mounted on the support structure and comprising a front edge, the transcowl movable between a first position, in which the front edge abuts the support structure, and a second position, in which an aperture is formed between the front edge and the support structure; anda first displaceable internal door pivotally mounted to the support structure and at least partially surrounded by the transcowl, the first displaceable internal door rotatable about a pivot axis and configured to be pivoted between a stowed position and a deployed position when the transcowl moves between the first position and the second position, respectively, the first displaceable internal door configured, when it is in the deployed position, to redirect engine airflow through the aperture to thereby generate reverse thrust, wherein the pivot axis is positioned aft of the front edge when the transcowl is in the second position.

Another thrust reverser system for a turbofan engine is provided. The thrust reverser system comprises: an annular support structure configured to be mounted the turbofan engine, the annular support structure comprising a circumferentially located opening; a transcowl mounted on the support structure and forming a portion of a nacelle aft of the turbofan engine, the transcowl movable between a first position, in which a front edge of the transcowl abuts the support structure, and a second position, in which an aperture is formed between the front edge and the support structure; anda first displaceable internal door pivotally mounted to the support structure and at least partially surrounded by the transcowl, the first displaceable internal door rotatable about a pivot axis and configured to be pivoted between a stowed position and a deployed position when the transcowl moves between the first position and the second position, respectively, the first displaceable internal door configured, when it is in the deployed position, to redirect engine airflow through the aperture to thereby generate reverse thrust, wherein the pivot axis is positioned aft of the front edge when the transcowl is in the second position.

A turbofan engine is also provided. The turbofan engine comprises: a thrust reverser system that comprises: a support structure configured to be mounted to the turbofan engine;a transcowl mounted on the support structure and comprising a front edge, the transcowl movable between a first position, in which the front edge abuts the support structure, and a second position, in which an aperture is formed between the front edge and the support structure; anda first displaceable internal door pivotally mounted to the support structure and at least partially surrounded by the transcowl, the first displaceable internal door rotatable about a pivot axis and configured to be pivoted between a stowed position and a deployed position when the transcowl moves between the first position and the second position, respectively, the first displaceable internal door configured, when it is in the deployed position, to redirect engine airflow through the aperture to thereby generate reverse thrust, wherein the pivot axis is positioned aft of the front edge when the transcowl is in the second position.

Other desirable features will become apparent from the following detailed description and the appended claims, taken in conjunction with the accompanying drawings and this background.

### BRIEF DESCRIPTION OF THE DRAWINGS

A more complete understanding of the subject matter may be derived by referring to the following Detailed Description and Claims when considered in conjunction with the following figures, wherein like reference numerals refer to similar elements throughout the figures, and wherein:
FIG. 1 - FIG. 3 are prior art perspective views of an aircraft turbofan engine with (i) a fan flow thrust reverser in a stowed position (FIG. 1), (ii) a mixed flow thrust reverser in a stowed position (FIG. 2) and (iii) a mixed flow thrust reverser in a deployed position (FIG. 3);
FIG. 4 is a three dimensional image of a thrust reverser system in a stowed (first) position, according to an exemplary embodiment;
FIG. 5 is a three dimensional image of the thrust reverser system of FIG. 4 in a deployed (second) position, according to the exemplary embodiment;
FIG. 6 is a three dimensional image a thrust reverser system of FIG. 4 in a deployed (second) position, according to another exemplary embodiment;
FIG. 7 is a partial cross sectional view, above a thrust reverser centerline, of a thrust reverser system in a stowed (first) position, according to an exemplary embodiment;
FIG. 8 isa partial cross sectional viewof the thrust reverser system in FIG. 7 in a deployed(second) position, according to the exemplary embodiment;
FIG. 9 is a partial cross sectional view, above a thrust reverser centerline, of a thrust reverser system in a stowed (first) position, according to another exemplary embodiment; and
FIG. 10 is a partial cross sectional view, above a thrust reverser centerline, of a thrust reverser system of FIG. 9 in a deployed(second) position according to the exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments.

Various embodiments are directed to a hybrid thrust reverser system suitable for an aircraft turbofan engine, and methods for producing the same. As will be apparent from the detail below, the exemplary embodiments advantageously provide improvements in efficiency over previously proposed hybrid thrust reverser designs. For example, cascade vanes may be necessary to achieve adequate and efficient reverse thrust performance for the target applications. In addition, reverse thrust efficiency may be increased with internal doors that pivot into a deployed position without interfering with either an aperture used for a reverse flow path or any cascade vanes located therein. The embodiments described beloware merely examples and serve as a guide for implementing the novel systems and methods herein on any industrial, commercial, military, or consumer turbofan application. As such, the examples presented herein are intended as non-limiting.

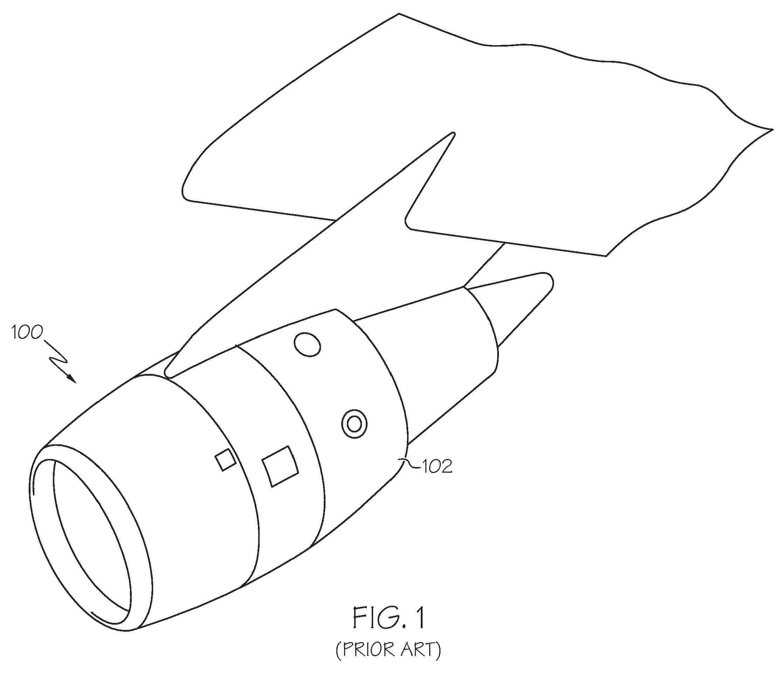

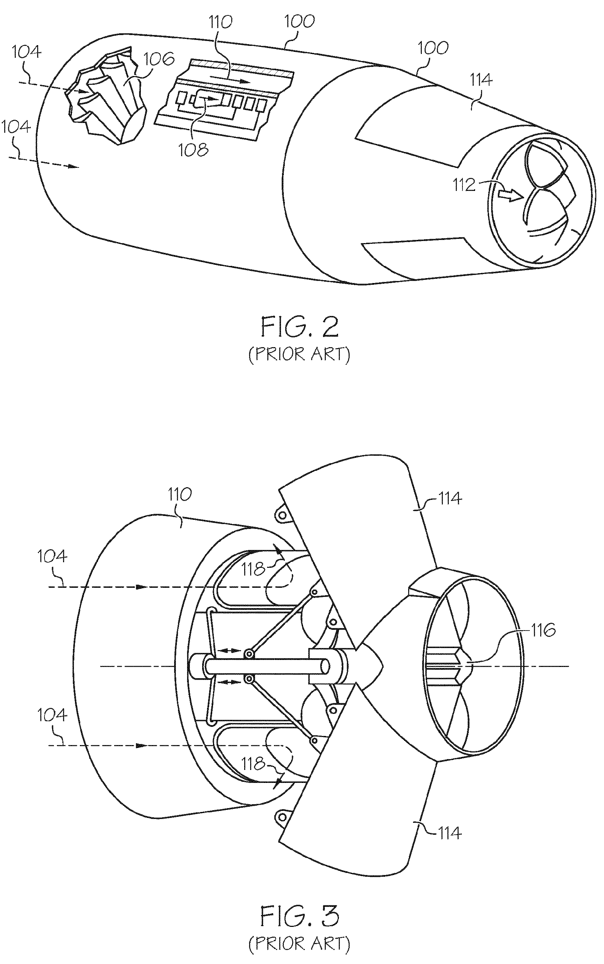

The turbofan engine is a component of an aircraft's propulsion system that typically generates thrust by means of an accelerating mass of gas. FIGS. 1 -3 are perspective views of a traditional aircraft turbofan engine with (i) a fan flow thrust reverser in a stowed position (FIG. 1), (ii) a mixed flow thrust reverser in a stowed position (FIG. 2), and (iii) a mixed flow thrust reverser in a deployed position (FIG. 3).

Turning now to the description and with reference to FIG. 1, the turbofan engine is substantially encased within an aerodynamically smooth outer covering, the nacelle **100**,which wraps around the turbofan engine. The nacelle **100** also extends aft from the turbofan engine, forming an aerodynamically shaped downstream portion having a cavity providing the engine exhaust flow path when the aircraft is producing forward thrust. Annular translatable cowl, or transcowl**102**, is positioned circumferentially, forming a portion of the nacelle **100.**

FIG. 2 depicts a traditional mixed flow thrust reverser in a stowed (first) position, and FIG. 3 depicts the traditional mixed flow thrust reverser in a deployed (second) position. Ambient air **104** enters the turbofan engine and passes through a fan **106.** Ambient air **104** is split into a portion that is pressurized, mixed with fuel and ignited, generating hot gasses **108.** Another portion of ambient air **104,** often referred to as "fan air" **110** only passes through the fan. The fan air **110** and hot gasses **108** become turbofan engine exhaust **112.** In FIG. 2, doors **114** are stowed, and in FIG. 3 the doors **114** are deployed. When the doors **114** are deployed, they may abut at center **116.** Deployed doors **114** create a reverse flow path **118.**

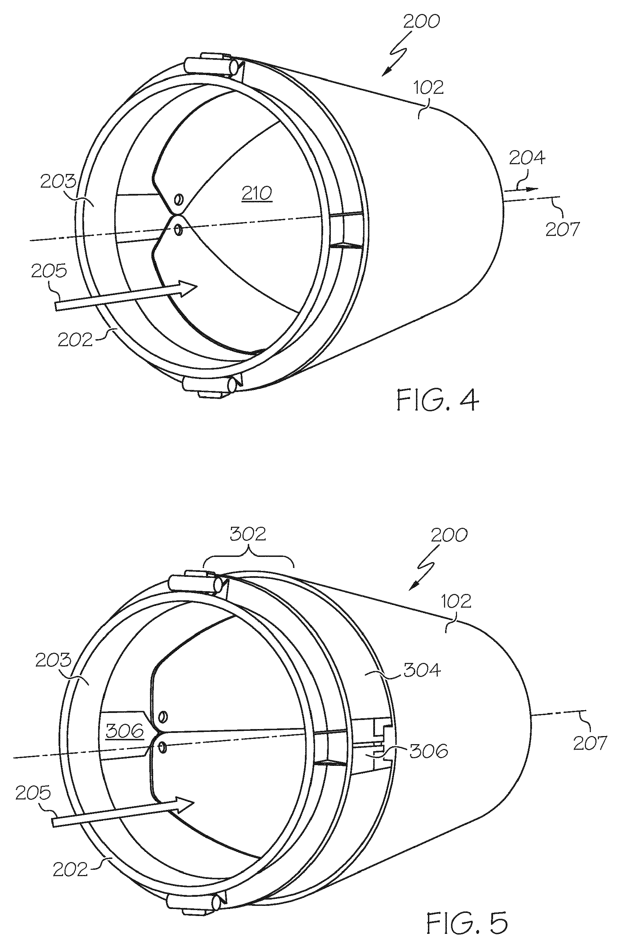

FIGS. 4-6 provide simplified three-dimensional images of exemplary embodiments of thrust reverser systems with some cascade-type thrust reverser features. FIG. 4 and FIG. 5 provide three dimensional images of a thrust reverser system **200** with transcowl**102** in a stowed (first) position (FIG.4), and in a deployed (second) position (FIG.5). A thrust reverser centerline **207** is depicted, along which the turbofan engine exhaust airflow **205** travels. Transcowl**102** forms the downstream portion of the nacelle **100**(described hereinabove), bounding the turbofan engine exhaust airflow **205.** As shown in FIGS. 4 and 5, turbofan engine exhaust airflow **205** enters through a forward side **203** of thrust reverser system **200.**

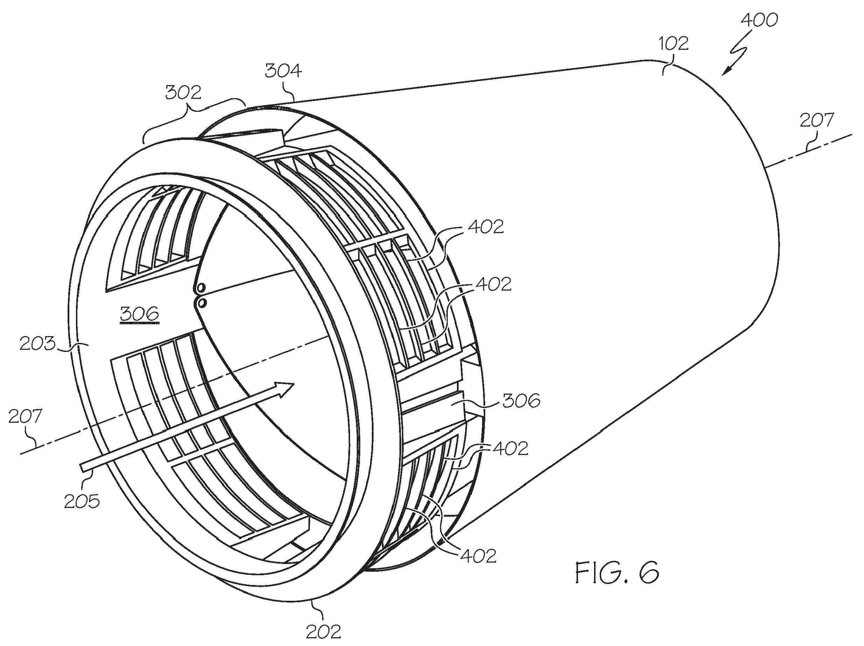

In a stowed (first) position, the front edge **304** of transcowl**102** abuts circumferentially with a portion of an annular support structure that includes an annular front flange **202** and one or more side beams **306**(FIG. 5). When transcowl**102** is deployed (moving aft, as shown by arrow **204),** the front edge **304** of transcowl**102** exposes an aperture **302** that is bounded on one side by front edge **304**(FIG. 5). As will be described in more detail below, deploying transcowl**102** results in redirecting turbofan engine exhaust airflow **205** through aperture **302;** redirected engine airflow is often referred to as reverse thrust, or an active reverse flow path. Cascade-type thrust reverser features, such as a plurality of cascade vanes, disposed within the aperture **302,** may be included in some embodiments (FIG. 6).

One or more side beams **306,** coupled to the annular front flange **202** and extending aft therefrom, are configured to slidably engage with transcowl**102**. The front flange **202** and associated side beams **306** provide a rigid annular support structure to which moveable thrust reverser components (described in detail below) may be mounted. The front flange **202** portion of the annular support structure also serves to mount the entire thrust reverser system **200** to the turbofan engine.

The inner surface **210** of the downstream portion of the nacelle **100** is typically formed by the inner surface of transcowl**102;**which is machined or manufactured to be smooth, free of blisters, pits, seams, or edges, machined to be a substantially continuous circumferential surface. It typically forms a bounded volumetric cavity that becomes the engine exhaust flow path in forward thrust mode. Accordingly, the one or more side beams **306** are preferably machined or manufactured to slidably engage with the transcowl**102** such that they are disposed substantially continuous with the inner surface **210,** thereby (i) minimizing disruption of the smoothness of the inner surface **210** and (ii) not introducing interference into the engine exhaust flow path.

FIG. 6 is a three dimensional image of a thrust reverser system of FIG. 4 having atranscowl in a deployed (second)position, according to another exemplary embodiment. The embodiment of FIG. 6 depicts a plurality of cascade vanes **402** disposed within the reverse flow path at the aperture **302.** In this embodiment, the transcowl**102** translates from the stowed (first) position to the deployed (second) position as previously described. However, while stowed, transcowl**102** covers the plurality of cascade vanes **402,** and when deployed, transcowl**102** exposes the cascade vanes **402.** The cascade vanes are shaped and oriented to direct turbofan engine exhaust airflow **205** through the aperture **302**when the reverse flow path is active. The number, position, size, material, etc., of the cascade vanes **402** are dependent upon the individual thrust reverser system design.

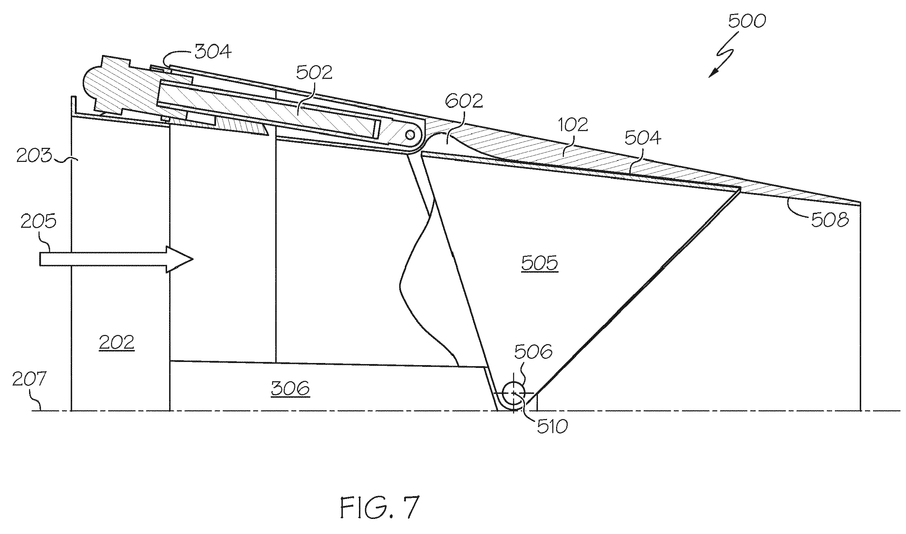

The embodiments shown in the figures that follow (FIGS 7-10) introduce displaceable internal doors to the cascade-type features already described. As an overview, the displaceable internal doors **(505, 704**)pivot on a pivot axis **(510,710),** and the internal doors stow and deploy along with the transcowl. When transcowl**102** is stowed, internal doors are stowed, and when the thrust reversers are commanded to deploy, transcowl**102**moves aft, causing one or morepivotally mounted internal doors to pivot into a deployed position. When deployed, the one or more internal doors block the aft directed turbofan engine exhaust airflow **205**that had been passing through the cavity bounded by the continuous inner surface **210,** thereby redirecting turbofan engine exhaust airflow **205**(directing it forward and radially), creating an active reverse flow path through the aperture **302.** The re-direction of turbofan engine exhaust airflow **205** creates a reverse thrust and, thus, works to slow the aircraft.

Although not the focus of the present invention, a variety of different mechanisms (not shown) may be used to couple internal doors to transcowls such that they stow and deploy in tandem. These mechanisms could range from a single connecting link to a complex kinematic linkage system. In any of the possible combinations, this linkage system is what transfers the linear transcowl motion into rotary (pivoting) internal door motion. Various embodiments of the internal doors are supported, as described below.

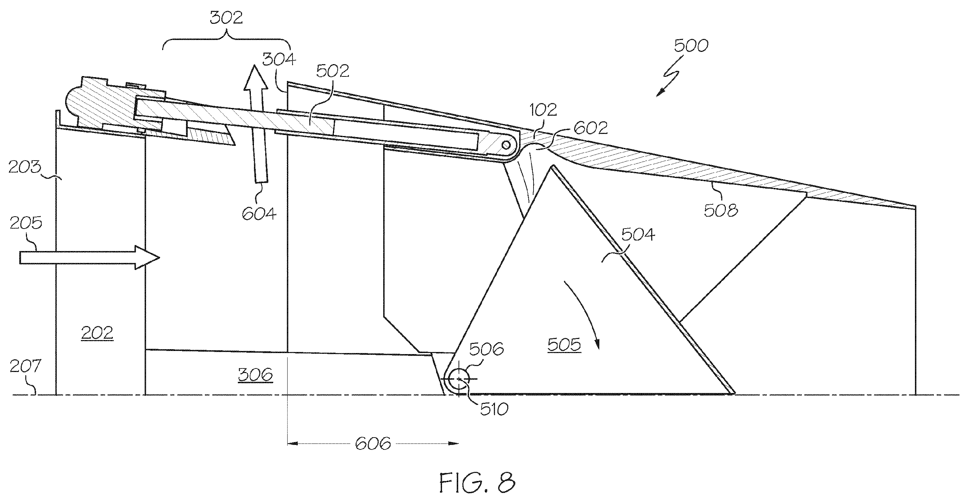

Turning now to FIG. 7 and FIG. 8, which are partial cross sectional views, above a thrust reverser centerline**207**, of a thrust reverser system **500** having the transcowlin a stowed position (FIG. 7) and in a deployed position (FIG. 8), according to an exemplary embodiment. FIG. 7 and FIG. 8 also depict an actuator **502,** whichis a movable thrust reverser component that causes transcowl**102** to move. The actuator **502** is mounted to front flange **202** and coupled to transcowl**102**. When actuator **502** extends, it causes the transcowl**102** to translate from the stowed (first) position to the deployed (second) position. Actuator **502** also retracts and returns transcowl**102** from the deployed position to the stowed position. Actuator **502** may comprise mechanical and/or electrical components, and may be responsive to aircraft engine system commands.

FIG. 7 is a partial cross sectional view, above a thrust reverser centerline**207,** of a thrust reverser system**500**having the transcowl**102**in a stowed position, according to an exemplary embodiment. Internal door **505** is pivotally mounted to side beam **306** at pivot joint **506**to allow internal door**505** to pivot about a pivot axis**510**. In FIG. 7, internal door **505** is shown with edge **504** substantially continuous with inner surface **508.** Although the cross sectional view of FIG. 7 may make internal door **505** appear to be two-dimensional, in practice it may be three-dimensional, for example, a clamshell shape. Internal door **505** is machined or manufactured to have a shape that permits it to be substantially continuous with the inner surface **508** of transcowl**102** while stowed, minimizing interference with turbofan engine exhaust airflow **205.**

FIG. 8 is a partial cross sectional viewof the thrust reverser system in FIG. 7 having the transcowl**102**in a deployed position, according to the exemplary embodiment. Actuator **502** is shown extended, and internal door **505** has pivoted into its deployed position. Internal door **505** is machined or manufactured to have a shape that permits it to obstruct turbofan engine exhaust airflow **205**and redirect it forward when internal door **505** is in its deployed position. In FIG. 8, internal door **505** can be seen to have deployed; it has moved to obstruct turbofan engine exhaust airflow**205**, directing it through aperture **302,** creating reverse flow path **604.**

As the internal door **505** pivots about the pivot axis **510,** it traces out a path that the inner surface **508** is modified to accommodate. The inner surface **508** is shaped with a contoured area **602,** depicted in FIG. 7 and FIG. 8, to provide clearance of internal door **505** as it pivots on its pivot axis **510** provided by pivot joint **506.** In this embodiment, pivot axis **510** is located a distance **606** downstream (aft) of the front edge **304** of the transcowl**102** when it is in its deployed (second) position. Advantageously, the location of pivot joint **506** provides pivot axis **510** that prevents the internal door **505,** when deployed, from obstructing or interfering with reverse flow path **604** and/or aperture **302.** Pivot joint**506** may be any fastener or fastening assembly capable of enabling the internal door **505** to pivot as described while meeting all attending design requirements. As one with skill in the art will appreciate, various embodiments of pivotally mounted internal doors are supported.

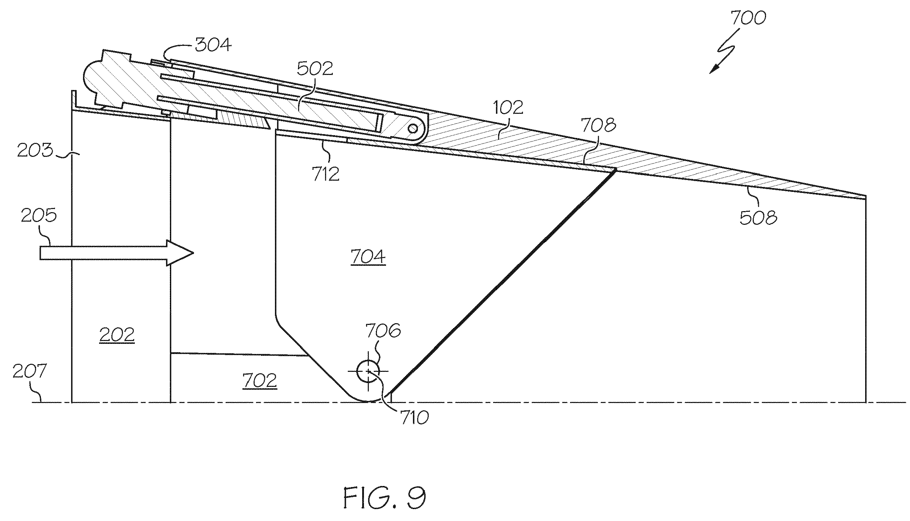

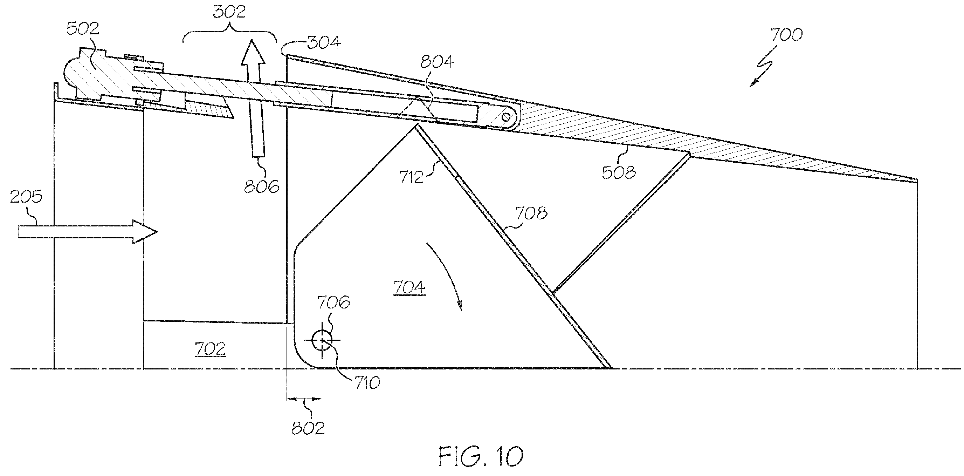

Another embodiment of pivotally mounted internal doors is presented in FIG. 9 and FIG. 10. FIG. 9 and FIG. 10 are partial cross sectional views of a thrust reverser system **700,** according to another exemplary embodiment. The cross sectional views in FIG. 9 and FIG. 10 also depict a portion of thrust reverser system **700** above thrust reverser centerline **207.** Internal door **704** is pivotally mounted to side beam **702** at pivot joint **706.** As in FIG. 9 and FIG. 10, when transcowl**102** is stowed, internal door **704** is stowed, and when transcowl**102** is deployed, internal door **704** is deployed. Actuator **502** functions as described above.

With reference to FIG. 9, internal door **704** is shown in its stowed position, with edge **708** substantially continuous with inner surface **508.** Although the cross sectional view of FIG. 9 may make internal door **704** appear to be two-dimensional, in practice it may be three-dimensional, for example, a clamshell shape. Internal door **704** is machined or manufactured to have a shape that permits it to be substantially continuous with the inner surface **508** of transcowl**102** while stowed.

FIG. 10 is a partial cross sectional viewof the thrust reverser system in FIG. 9 having the transcowl**102**in a deployed position, according to the exemplary embodiment. Actuator **502** is shown extended, and internal door **704** has pivoted, about its pivot axis **710,** into its deployed position, blocking turbofan engine exhaust airflow **205.** Internal door **704** is machined or manufactured to have a shape that permits it to obstruct turbofan engine exhaust airflow **205**and redirect it forward when internal door **704** is in its deployed position. In FIG. 10, internal door **704** can be seen to have deployed; it has moved to obstruct turbofan engine exhaust airflow**205**, directing it through aperture **302,** creating reverse flow path **806.**

As the internal door **704** pivots about the pivot axis **710,** it traces out a path that inner surface **508** is modified to accommodate. The contoured area **804,** depicted in FIG. 10, is formed within inner surface **508** to provide clearance of internal door **704** as it pivots about the pivot axis **710** provided by pivot joint **706.** In this embodiment, pivot axis **710** is located a distance **802** downstream (aft) of the front edge **304** of the transcowl**102** when it is in its deployed (second) position. Advantageously, the location of pivot joint **706** provides a pivot axis **710** that prevents the internal door **704,** when deployed, from obstructing or interfering with reverse flow path **806** and/or aperture **302.** Pivot joint **706** may be any fastener or fastening assembly capable of enabling the internal door **704** to pivot as described while meeting all attending design requirements.

Although the figures are not to scale, comparing FIG. 8 to FIG. 10 provides a first-pass visual understanding of the relationship between the locations of the pivot axes (provided by the pivot joints), the shape of the inner door, and the size and shape of the associated contour formed within the inner surface. Paying specific attention to the internal doors, although both embodiments depict internal doors that deploy to redirect thrust, there are several notable similarities. First, in both embodiments, the pivot joints **(506, 706)** provide a pivot axis **(510, 710)** that is aft of the front edge **304** of the transcowl**102**. Also, in both embodiments, the location of pivot joints **(506, 706)** and the shape of the internal doors are designed to ensure that the internal doors themselves are completely out of the way of the reverse flow path **(806,604)** when the internal doors are deployed (i.e., when transcowl**102** is in its deployed (second) position). Further, it is observable that the pivot axis may be placed in a variety of locations aft of the front edge **304** while still satisfying these design guidelines, for example the location of pivot axis **510** is more aft than the location of pivot axis **710.**

The distance aft of the front edge **304** that a given pivot joint is located (for example, **606** and **802**) is design specific and informs additional design decisions regarding the shape of the internal doors and the associated shape and size of the contoured area **(804, 602)** formed, typically by machining, within the inner surface **508.** As may be readily appreciate by those with skill in the art, the shape, material and size of the internal doors may be further modified with openings in order to provide clearance forone or more actuators and/or mechanisms employed to couple a respective internal door to a respectivetranscowl. Opening **712,** shown in FIG. 9 and FIG. 10, provides a two-dimensional view of an opening in internal door **704** that is configured to accommodate the actuator **502** as internal door **704** pivots.

The hybridized thrust reverser embodiments described herein combine internal doors, unobstructed reverse flow paths, and cascade vanes. The combinations of features presented advantageously provide a thrust reverser system capable of providing enhanced reverse thrust performance while reducing weight, cost, and complexity.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical. Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

Some of the embodiments and implementations are described above in terms of functional and/or logical block components (or modules), for example, the control circuitry referenced but not shown, or the actuator **502.** However, it should be appreciated that such block components (or modules) may be realized by any number of hardware, software, and/or firmware components configured to perform the specified functions. To clearly illustrate this interchangeability of hardware and software, these illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

## Claims

1. A thrust reverser system for a turbofan engine, comprising:
a support structure configured to be mounted to the turbofan engine;
a transcowl mounted on the support structure and comprising a front edge, the transcowl movable between a first position, in which the front edge abuts the support structure, and a second position, in which an aperture is formed between the front edge and the support structure;
and
a first displaceable internal door pivotally mounted to the support structure and at least partially surrounded by the transcowl, the first displaceable internal door rotatable about a pivot axis and configured to be pivoted between a stowed position and a deployed position when the transcowl moves between the first position and the second position, respectively, the first displaceable internal door configured, when it is in the deployed position, to redirect engine airflow through the aperture to thereby generate reverse thrust, wherein the pivot axis is positioned aft of the front edge when the transcowl is in the second position.

2. The thrust reverser system of Claim 1, wherein the transcowl further comprises an inner surfacehaving a contour formed therein to provide clearance for the first internal door as it pivots between the stowed position and the deployed position.

3. The thrust reverser system of Claim 1, further comprising an actuator mounted on the support structure and coupled to the transcowl, the actuator configured to move the transcowl from the first position to the second position.

4. The thrust reverser system of Claim 3, wherein the first displaceable internal door comprises an opening positioned to provide clearance for the actuator as the displaceable internal door pivots.

5. The thrust reverser system of Claim 1, and wherein the support structure comprises:
a substantially circular flange configured to be mounted to the turbofan engine, and
a first side beam extending aft from the flange and configured to slidably engage with the transcowl.

6. The thrust reverser of Claim 5, wherein the first internal door is pivotally mounted to the side beam.

7. The thrust reverser of Claim 1, wherein the support structure further comprises a circumferentially located opening, and wherein the first internal door is further shaped and pivotally mounted to the support structure such that, when in the deployed position, the first internal door does not obstruct the opening.

8. The thrust reverser of Claim 1, further comprising a second internal door pivotally mounted to the support structure and at least partially surrounded by the transcowl, the second displaceable internal door rotatable about the pivot axis and configured to be pivoted between a stowed position and a deployed position when the transcowl moves between the first position and the second position, respectively, the second displaceable internal door configured, when it is in the deployed position, to redirect engine airflow through the aperture to thereby generate reverse thrust.

9. The thrust reverser system of Claim 1, wherein the transcowl forms a portion of a nacelle surrounding the turbofan engine.

10. A turbofan engine, comprising:
a thrust reverser system, comprising
a support structure configured to be mounted to the turbofan engine;
a transcowl mounted on the support structure and comprising a front edge, the transcowl movable between a first position, in which the front edge abuts the support structure, and a second position, in which an aperture is formed between the front edge and the support structure;
and
a first displaceable internal door pivotally mounted to the support structure and at least partially surrounded by the transcowl, the first displaceable internal door rotatable about a pivot axis and configured to be pivoted between a stowed position and a deployed position when the transcowl moves between the first position and the second position, respectively, the first displaceable internal door configured, when it is in the deployed position, to redirect engine airflow through the aperture to thereby generate reverse thrust, wherein the pivot axis is positioned aft of the front edge when the transcowl is in the second position.

11. The turbofan engine of Claim 10, wherein the transcowl further comprises an internal surface, and wherein the inner surface is shaped to provide clearance for the first internal door as it pivots between the stowed position and the deployed position.

12. The turbofan engine of Claim 10, further comprising an actuator mounted on the support structure and coupled to the transcowl, the actuator configured to move the transcowl from the first position to the second position.

13. The turbofan engine of Claim 12, wherein the first displaceable internal door comprises an opening positioned to provide clearance for the actuator.
